# EUROPEAN PATENT SPECIFICATION

(11) **EP 1 668 951 B1**
(45) Date of publication and mention of the grant of the patent: **28.12.2011**
(21) Application number: 04785381.7
(22) Date of filing: 04.10.2004
(51) Int. Cl.: H04W 8/20

(54) **NETWORK AND METHOD FOR REGISTRATION OF MOBILE DEVICES AND MANAGEMENT OF THE MOBILE DEVICES**
NETZWERK UND VERFAHREN ZUR ANMELDUNG MOBILER GERÄTE UND ZUR VERWALTUNG DER MOBILEN GERÄTE
RESEAU ET PROCEDE D'ENREGISTREMENT DE DISPOSITIFS MOBILES ET DE GESTION DES DISPOSITIFS MOBILES

(30) Priority: 03.10.2003 US 508569 P
(43) Date of publication of application: 14.06.2006
(73) Proprietor: HEWLETT-PACKARD DEVELOPMENT COMPANY, L.P., Houston, TX 77070 (US)
(72) Inventor: CHEN, Shao-Chun, Aliso Viejo, California 92656 (US); LIM, Jeong M., Changwon (KR)
(74) Representative: Schoppe, Fritz
(86) International application number: PCT/US2004/033071
(87) International publication number: WO 2005/036916

(56) References cited:
- EP-A- 1 331 833
- WO-A-00/01187
- WO-A-99/21382
- WO-A-03/012574
- US-B1- 6 223 039

## Description

### BACKGROUND OF THE INVENTION

Electronic devices, such as mobile phones and personal digital assistants (PDAs), often contain firmware and application software that are either provided by the manufacturers of the electronic devices, by telecommunication carriers, or by third parties. These firmware and application software often contain software bugs. New versions of the firmware and software are periodically released to fix the bugs or to introduce new features, or both. An update agent in an electronic device can be employed to update the firmware/software in the electronic device. Mobile devices need to be registered to receive services, such as firmware updates. However, determining the information needed for such registration is complicated. Collecting all of the information needed from a handset is also complicated. Additionally, in a carrier network, it is not easy to store or handle such information. In addition, making such stored information available for services is important.

Determining what makes a mobile device unique is important, but often quite complicated. Some of the techniques are technology specific. For example, unique identification of mobile devices is often bearer specific.

Quite often, in a Global System for Mobile Communications (GSM) network, a subscriber changes phones and uses the same subscriber identification module (SIM) card. The network is unable to detect this event in most networks. In addition, a subscriber may borrow the SIM/smart card of someone else and use it in the subscriber's own mobile handset without the network being aware of such a change. Managing updates of configuration and firmware is therefore complicated by such activities of a subscriber.

Further limitations and disadvantages of conventional and traditional approaches will become apparent to one of skill in the art, through comparison of such systems with some aspects of the present invention as set forth in the remainder of the present application with reference to the drawings.
WO 03012574 A2 describes a system and method for automatically initiating provisioning procedures for terminals in a wireless network. Terminals that have not been provisioned for connection to a network or service are automatically recognized at the network. When such an unprovisioned terminal has been detected, a notification is dispatched to an appropriate provisioning network entity to initiate the provisioning procedures for the unprovisioned terminal.
EP 1 331 833 A1 describes a system and process for storing and updating mobile terminal features of the users of a mobile telephone network. The system comprises obtainment means of the IMEI associated with its MSISDN from the mobile telephone network, storage means of the obtained MSISDN-IMEI pair and a consultation interface permitting access to the MSISDN-IMEI pair from an outside application or from the network itself in order to obtain from the IMEI the features of each terminal associated with its MSISDN and to thus be able to provide the different services adapted to the features of each terminal even though the user changes it. It also comprises storage means the features of each mobile terminal model existing on the market and an administration interface for permitting the aforementioned function.
WO 00/01187 A1 describes a dual-mode communication system made up of an AMPS network and a GSM network that provides for communication to and from dual-mode terminals equipped with corresponding SIM cards. The mobile terminals store a terminal-based ESN, and the SIM cards store a SIM-based ESN and MIN. The dual-mode system uses the terminal-based ESN and MIN for registration in the AMPS network. For authentication purposes, however, the dual-mode system uses the SIM-based ESN for key-based authentication in the AMPS network.

### BRIEF SUMMARY OF THE INVENTION

The invention is defined in independent claims 1 and 15. Aspects of the present invention may be found in a communication network comprising at least one mobile electronic device comprising a removable memory, and at least one server capable of communication with the at least one mobile electronic device. The communication network may register the at least one mobile electronic device with the at least one server such that the mobile electronic device can be uniquely identified in the communication network. In a representative embodiment of the present invention, the removable memory may comprise one of a smart card and a subscriber identity module (SIM) card, and the at least one server may comprise a registration server. The at least one mobile electronic device may comprise an international mobile equipment identifier (IMEI), and the removable memory may comprise a mobile station international integrated services digital network (MSISDN) number. The network may register the international mobile equipment identifier (IMEI) and the mobile station international integrated services digital network (MSISDN) number using the at least one server. In a representative embodiment according to the present invention, registering the at least one mobile electronic device with the at least one server may comprise associating the international mobile equipment identifier (IMEI) with the mobile station international integrated services digital network (MSISDN) number. In another representative embodiment of the present invention, registering the at least one mobile electronic device with the at least one server may comprise associating the international mobile equipment identifier (IMEI) with the mobile station international integrated services digital network (MSISDN) number and profile information.

In a representative embodiment of the present invention, the profile information may comprise at least one of a manufacturer identifier, a model identifier, a firmware version, a list of registered services, device capabilities, and a subscriber class. The at least one mobile electronic device may comprise one of a cellular telephone, a personal digital assistant (PDA), a pager, and a personal computers (PC). The at least one mobile electronic device may be capable of detecting a change of the removable memory, and the at least one mobile electronic device may notify the at least one server when a change of the removable memory is detected. The at least one server may request at least one of an international mobile equipment identifier (IMEI) and a mobile station international integrated services digital network (MSISDN) number from the at least one mobile electronic device when a change of the removable memory is detected.

Additional aspects of the present invention may be seen in a communication network supporting registration of a plurality of mobile electronic devices. Each of the plurality of mobile electronic devices may comprise an international mobile equipment identifier (IMEI) associated at any point in time with one of a plurality of unique subscriber identification module (SIM) cards. The communication network may dynamically maintain a mapping of the international mobile equipment identifier (IMEI) with the current associated one of the plurality of unique subscriber identification module (SIM) cards. The communication network is capable of detecting a change in the association of one of the plurality of subscriber identification module (SIM) cards and the international mobile equipment identifier (IMEI) of one of the plurality of mobile electronic devices. A message may be sent to the one of the plurality of mobile electronic devices if a change in the association of one of the plurality of subscriber identification module (SIM) cards and the international mobile equipment identifier (IMEI) of one of the plurality of mobile electronic devices occurs, and the message may be a short message service (SMS) message. In various representative embodiments of the present invention, the plurality of mobile electronic devices may comprise one of a cellular telephone, a personal digital assistant (PDA), a pager, and a personal computers (PC).

Yet further aspects of the present invention may be found in a method of operating a communication network comprising a plurality of mobile electronic devices having removable memory containing subscriber related information. Such a method may comprise receiving information identifying one of the plurality of mobile electronic devices, receiving subscriber related information from the one of the plurality of mobile electronic devices, and associating the information identifying the one of the plurality of mobile electronic devices with the received subscriber related information. In a representative embodiment according to the present invention, the method may also comprise detecting a change in an association of information identifying one of the plurality of mobile electronic devices and subscriber related information. In addition, the method may comprise sending a message to the one of the plurality of mobile electronic devices, if a change in an association of information identifying the one of the plurality of mobile electronic devices and subscriber related information is detected. The message may comprise a short message service (SMS) message, and the plurality of mobile electronic devices may comprise one of a cellular telephone, a personal digital assistant (PDA), a pager, and a personal computers (PC). The removable memory may comprise one of a smart card and a subscriber identity module (SIM) card, and the information identifying one of the plurality of mobile electronic devices may comprise one of an electronic serial number (ESN) and an international mobile equipment identifier (IMEA). The subscriber related information may comprise a mobile station international integrated services digital network (MSISDN) number, an international mobile station identifier (IMSI), a temporary international mobile station identifier (TIMSI), and a mobile identification number (MIN).

These and other advantages, aspects, and novel features of the present invention, as well as details of illustrated embodiments, thereof, will be more fully understood from the following description and drawings.

### BRIEF DESCRIPTION OF SEVERAL VIEWS OF THE DRAWINGS

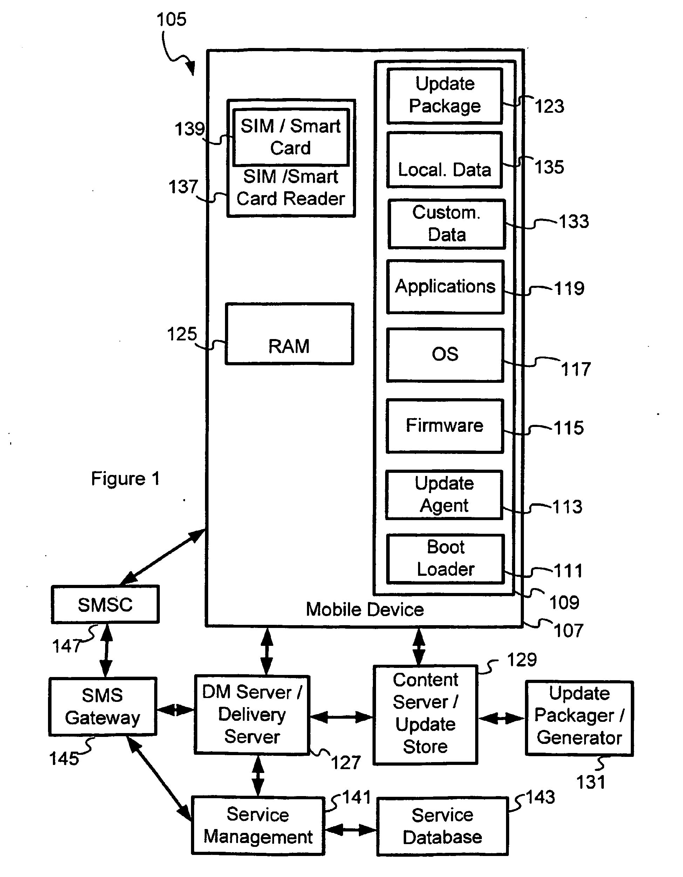

Figure 1 is a perspective diagram of a network for the registration of mobile devices such that the mobile devices can be uniquely identified in the network, the elements of identification comprising, for example, international mobile equipment identifier (IMEI) information, a mobile station international ISDN number (MSISDN), and profile information, in accordance with a representative embodiment of the present invention.

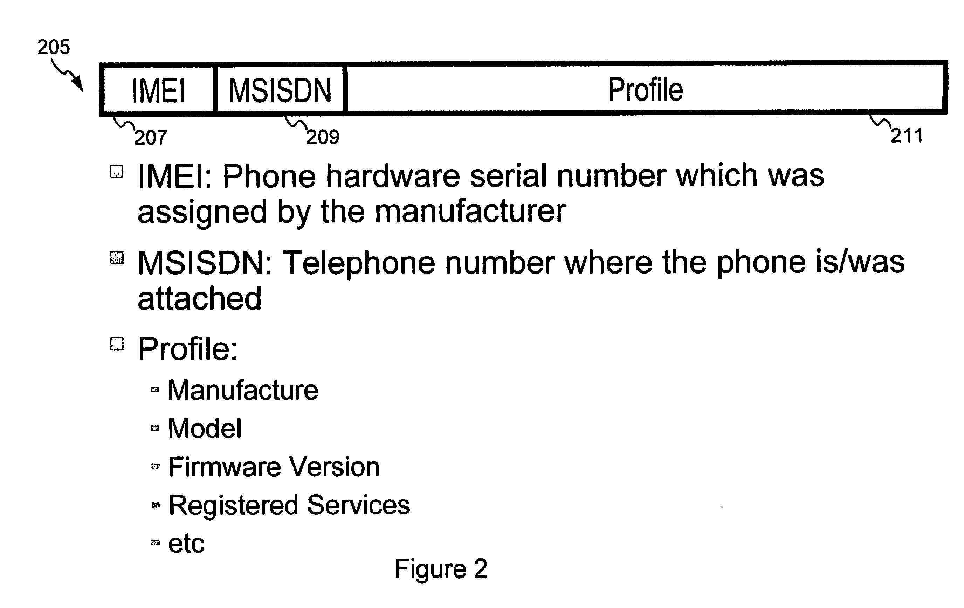

Figure 2 is an exemplary registration record that captures an association between a SIM/smart card and a mobile device, wherein the SIM/smart card is tracked along with mobile device specific information such as, for example, IMEI information, in accordance with a representative embodiment of the present invention.

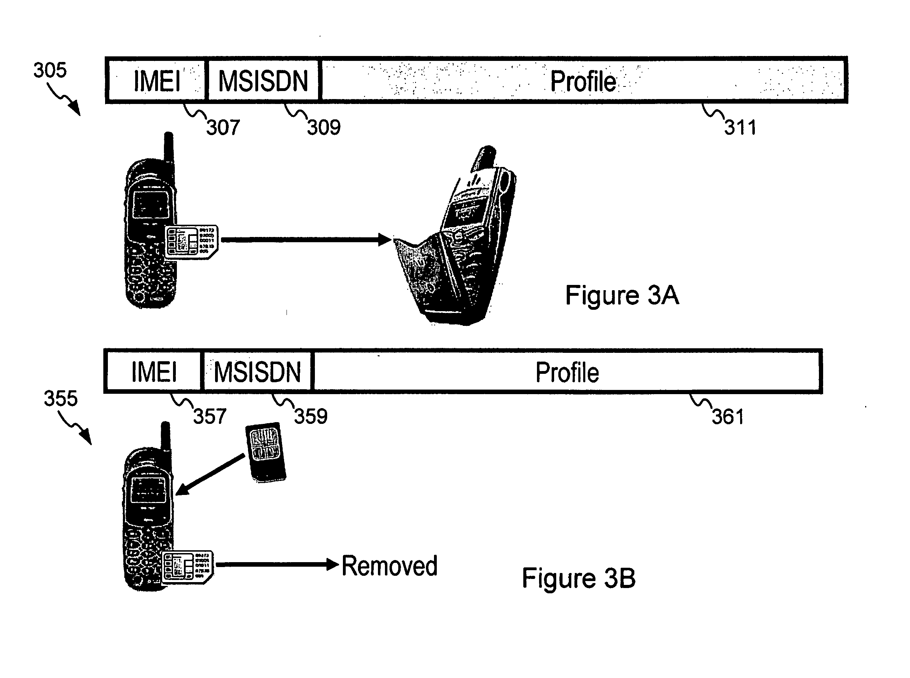

Figure 3A is a perspective diagram of a registration record associated with a SIM/smart card switch, wherein the SIM/smart card is transferred from one mobile device to another, in accordance with a representative embodiment of the present invention.

Figure 3B is a perspective diagram of a registration record associated with a SIM/smart card switch wherein the SIM/smart card is changed in a mobile device, in accordance with a representative embodiment of the present invention.

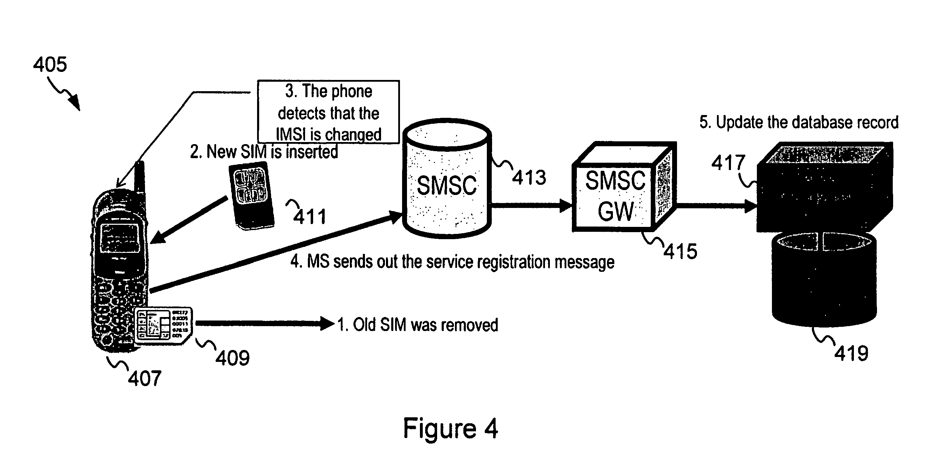

Figure 4 is a perspective block diagram of an exemplary operator's network that supports the registration of device and subscriber-specific information wherein the mobile handset takes the initiative to register the device specific information and the subscriber-specific information currently associated with the device with a service management module that makes it persistent in a service database, in accordance with a representative embodiment of the present invention.

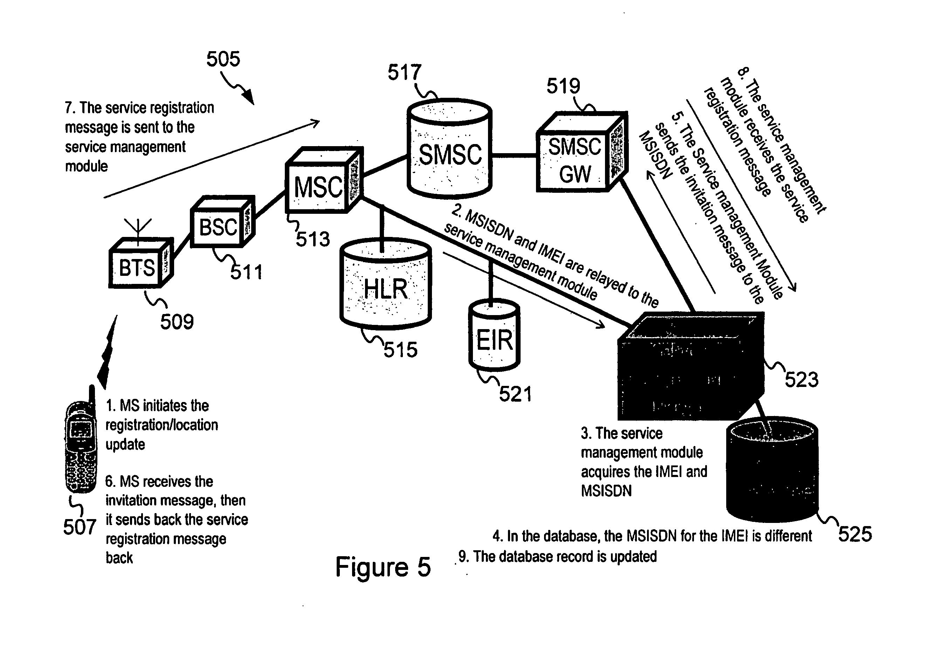

Figure 5 is a perspective block diagram of an exemplary operator's network that supports the registration of device and subscriber-specific information wherein the network takes the initiative to register the device specific information and the subscriber specific information currently associated with the device, in accordance with a representative embodiment of the present invention.

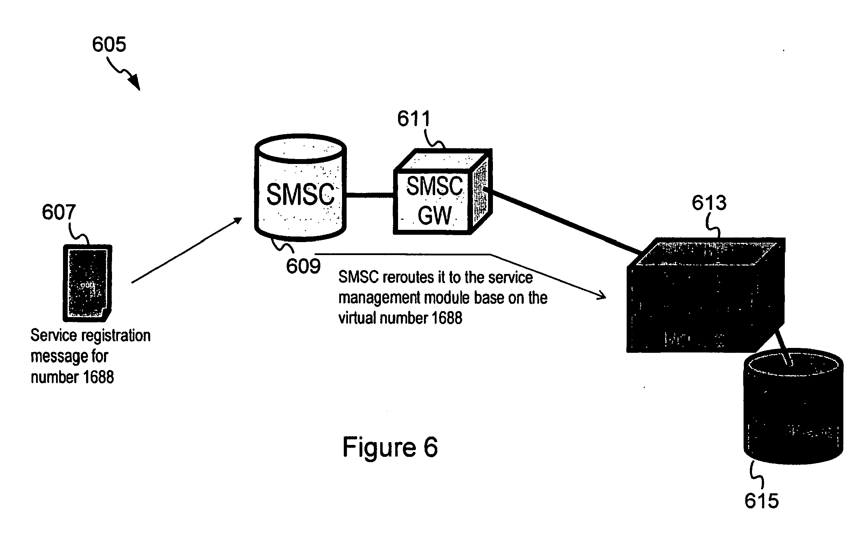

Figure 6 is a perspective block diagram of an exemplary operator's network that supports the registration of device and subscriber association information as part of a service registration, and the storage of such a service registration in a service database accessible from a service management module, in accordance with a representative embodiment of the present invention.

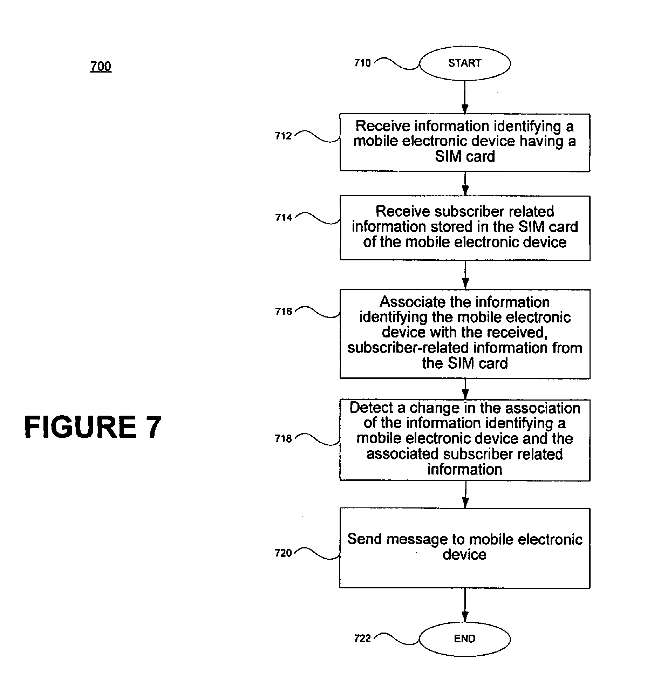

Figure 7 shows a flowchart of an exemplary method of operating a communication network of mobile electronic devices such as, for example, mobile handsets, each of the mobile electronic device having a subscriber identify module (SIM) card containing subscriber related information, in accordance with a representative embodiment of the present invention.

### DETAILED DESCRIPTION OF THE INVENTION

The present invention relates generally to generating updates of firmware/software components in electronic devices such as, for example, mobile handsets using an update agent, and more specifically to the use of instruction sets in the generation of update packages that the update agents may process to produce updates for the firmware/software components. Although the following discusses aspects of the invention in terms of a mobile handset (e.g., a mobile phone or cellular telephone), it should be clear that the following also applies to other mobile electronic devices such as, for example, personal digital assistants (PDAs), pagers, personal computers (PCs), and similar handheld electronic devices.

Figure 1 is a perspective diagram of a network 105 for the registration of mobile devices such that the mobile devices can be uniquely identified in the network, the elements of identification comprising, for example, international mobile equipment identifier (IMEI) information, a mobile station international ISDN number (MSISDN), and profile information, in accordance with a representative embodiment of the present invention. The IMEI information provides a mobile device (e.g., mobile phone hardware) serial number typically assigned by the manufacturer. Other forms of such information include, for example, an electronic serial number (ESN). The MSISDN is typically a telephone number employed by the phone, i.e. where the phone is/was attached. Other subscriber related identifiers include, for example, an international mobile station identifier (IMSI), a temporary international mobile station identifier (TIMSI), and a mobile identification number (MIN). The profile information comprises, for example, a manufacturer, a model, a firmware version, a list of registered services, etc.

The network 105 shown in Figure 1 comprises a mobile device 107 with a SIM/smart card 139 communicatively coupled to a device management (DM) server 127, a short message service center (SMSC) 147, a short message service (SMS) gateway (SMSGW) 145, a service management unit 141, and a service database 143.

A database in the network 105 such as, for example, the service database 143, may be used to maintain records about the mobile devices that access services in the network. The records of the service database 143 may comprise the unique identification for the mobile device, i.e. the combination of IMEI information, a MSISDN, and profile information.

Typically, when a SIM card such as, for example, the SIM/smart card 139 is changed in a mobile device, the mobile equipment identification (e.g., IMEI) information remains the same, but the subscriber directory number for the mobile handset (e.g., MSISDN, MIN, IMI, TIMSI) changes. In a representative embodiment of the present invention, a new record may be created in the service database 143 to reflect such a change in the MSISDN.

In some situations, the mobile equipment (e.g., mobile handset) may be changed and the SIM/smart card 139 may remain the same. In a representative embodiment of the present invention, the profile information may be changed.

When the SIM/smart card 139 in the mobile device 107 is switched to another mobile device (e.g., to a different mobile phone), the IMEI information and the profile information may be updated with the information of the new mobile device attached on the MSISDN of the SIM. In a representative embodiment of the present invention, the record to be updated may be retrieved using the MSISDN.

In a representative embodiment of the present invention, when a different SIM with a different service (e.g., a different MSISDN) is inserted into a mobile device (e.g., mobile handset), the MSISDN of the database record for the mobile device (Mobile Equipment) may be updated. In a representative embodiment according to the present invention, the corresponding record to be updated may be obtained using the IMEI information.

In a representative embodiment of the present invention, there are three ways in which the registration of a mobile device maintained in the service database may be changed - by user initiative, by mobile device initiative, and by system initiative, i.e. network initiative. In the case of the network initiative (also referred to above as the "system initiative"), the network 105 in a representative embodiment of the present invention may detect/determine that a new mobile device is attached from the IMEI DB in the equipment identity register (EIR). The equipment identity register is one of the databases in an operator's (e.g., service provider's) network. The EIR typically lists stolen phones, fraudulent telephone identity numbers, and faulty equipment. It is one tool used by a service provider to deny service or track problem equipment. Upon detecting that a new mobile device is present in the network, the network may send a message inviting/requesting a registration message.

In a representative embodiment of the present invention, the network 105 with mobile devices supports tracking of MSISDN associated with mobile devices, and updating of the mapping between, for example, IMEI information, an MSISDN, and user profile information, etc. The mobile device 107 may perform firmware updates, when a new device is detected as being associated with a known MSISDN.

In a representative embodiment of the present invention, the IMEI information field in the database record 205 may be a mobile phone hardware serial number assigned by the manufacturer. The MSISDN field may be a telephone number associated with the mobile phone. The profile information section may, for example, comprise the following information in appropriate fields: Manufacture, Model, Firmware Version, Registered Services, and similar information related to a mobile device.

Figure 2 is an exemplary registration record 205 that captures an association between a SIM/smart card and a mobile device, wherein the SIM/smart card is tracked along with mobile device specific information such as, for example, IMEI information, in accordance with a representative embodiment of the present invention. For example, the registration record 205 may be used in an operator's network to track the association between a SIM/smart card and a mobile device when the SIM/smart card is transferred from one mobile device to another, or when a new SIM/smart card is inserted into the mobile device. The registration record 205 shown in Figure 2 comprises an IMEI field 207, an MSISDN field 209, and profile information field 211.

In a representative embodiment of the present invention, the registration record 205 may be updated when there is a SIM card change event detected in the mobile device, or when the network determines that the association between the IMEI information and the MSISDN for the mobile device has changed. In a representative embodiment of the present invention, the registration record may be modified in at least two situations. The first situation may occur when the mobile handset (also referred to as mobile equipment, a mobile phone, and a mobile device) changes, but the SIM card remains the same. In this case, the associated profile information may be changed in the registration record 205. The second situation may occur when the SIM card changes, but the mobile equipment remains the same. In this case, the associated MSISDN may be changed. The modification of the registration record 205 may occur in the network operator's environment, and may be managed by the network operator.

In a representative embodiment of the present invention, both the MSISDN and the IMEI information may act as foreign keys into a database table of profile records, and knowing just one of them may make it possible to retrieve the profile record.

In a representative embodiment of the present invention, both subscriber-specific information such as, for example, an MSISDN, and device-specific information such as, for example, IMEI information, may act as foreign keys into a database table of device profile records, and knowing just one of them may make it possible to retrieve the desired profile record.

Figure 3A is a perspective diagram of a registration record 305 associated with a SIM/smart card switch, wherein the SIM/smart card is transferred from one mobile device to another, in accordance with a representative embodiment of the present invention. In one representative embodiment of the present invention, when the SIM card is switched from one mobile device to another mobile device (i.e., mobile phone, mobile handset, mobile equipment), an IMEI field 307 and a profile field 311 in the corresponding registered record 305 may be updated with the information of the new mobile handset associated or attached on a MSISDN 309 of the SIM card. In addition, the registration record 305 in the database may be obtained using the MSISDN 309, as it may be invariant in this situation. Therefore, in this situation, the MSISDN 309 may be used as a foreign key in a database of registration records such as, for example, the registration record 305 of Figure 3A.

Figure 3B is a perspective diagram of a registration record 355 associated with a SIM/smart card switch wherein the SIM/smart card is changed in a mobile device, in accordance with a representative embodiment of the present invention. If a different SIM/smart card with the different service (i.e., a different MSISDN 359) is inserted into the same mobile device, the MSISDN 359 of the registration record 305 for this mobile device may be updated. The registration record 355 may be obtained for the update using a IMEI field 357, which may be an invariant in this situation.

In a representative embodiment of the present invention, a "registration message" may be sent to a device profile database in three ways when a mobile handset (i.e., mobile equipment, mobile device) is used by a subscriber. In the first approach, the mobile handset may take the initiative. The mobile handset may detect a new SIM/smart card (i.e., detect that there is a new SIM card inserted into the mobile handset) and may send out a registration message to the network operator. The registration message may then be routed to the device profile database (or some other database, as appropriate). In the second of the three approaches, the user may take the initiative and the user may send the registration message actively from, for example, a menu item. In a third approach the system (e.g., carrier or operator network) may take the initiative, by detecting a new mobile handset such as, for example, by monitoring activities on an IMEI database (DB) in the equipment identity register (EIR), and may send an invitation message to the mobile handset to get the registration message back.

Figure 4 is a perspective block diagram of an exemplary operator's network 405 that supports the registration of device and subscriber-specific information wherein the mobile handset 407 takes the initiative to register the device specific information and the subscriber-specific information currently associated with the device with a service management module 417 that makes it persistent in a service database 419, in accordance with a representative embodiment of the present invention.

In one representative embodiment of the present invention, the mobile handset 407 may take the initiative to register with the network operator 405. The mobile handset 407 (also referred to as mobile equipment, or mobile telephone) may cache an international mobile station identifier (IMSI) from the currently inserted SIM/smart card 409. If the IMSI from the newly inserted SIM/smart card 411 is different from the cached information from the previous SIM/smart card 409, a service registration message may be sent by the mobile handset 407 to request information used to update a database record in the service database 419. This may occur without the knowledge of the user of the mobile handset 407.

In a representative embodiment of the present invention, a menu item may be provided that causes a service registration message to be communicated (sent out) when the user selects the menu item. In such an embodiment, the user may select the menu item to activate the service.

Figure 5 is a perspective block diagram of an exemplary operator's network 505 that supports the registration of device and subscriber-specific information wherein the network 505 takes the initiative to register the device specific information and the subscriber specific information currently associated with the device, in accordance with a representative embodiment of the present invention. In a representative embodiment of the present invention, the device-specific information may, for example, comprise an IMEI, and the subscriber-specific information may, for example, comprise an MSISDN or similar identifier. The network 505 shown in Figure 5 comprises a mobile handset 507, a base transceiver station (BTS) 509, a base station controller (BSC) 511, a mobile switching center (MSC) 513, a home location register (HLR) 515, an equipment identification register (EIR) 521, a short message service center (SMSC) 517, a SMSC gateway (SMSCG) 519, a service management module 523, and a service database 525.

In one representative embodiment of the present invention, the operator's network 505 may take the initiative to register the mobile handset 507 with a database in the network 505. In such an embodiment, the service management module 523 may acquire registered IMEI numbers from the EIR 521. If the IMEI is new to the service database 525, or the MSISDN associated with that IMEI in a corresponding record in the database is different from the currently identified MSISDN, an invitation message may be sent out (e.g., by a real time process) to the mobile handset 507. In another representative embodiment of the present invention, the invitation message may be sent in a deferred mode. In such an embodiment, the invitation message may be sent later, after the service management module 523 has refreshed the service database 525 (e.g., by a batch process).

In a representative embodiment according to the present invention, when the mobile handset 507 receives the invitation message, a service registration message with the associated profile may be sent back to the service database 525. In a related representative embodiment of the present invention, the invitation message may comprise a wireless application protocol (WAP) package 0, to initiate a SyncML Device Management (DM) session. The SyncML DM protocol is described in specification documents published by the Open Mobile Alliance, Ltd.

Figure 6 is a perspective block diagram of an exemplary operator's network 605 that supports the registration of device and subscriber association information as part of a service registration 607, and the storage of such a service registration in a service database 615 accessible from a service management module 613, in accordance with a representative embodiment of the present invention. In a representative embodiment of the present invention, the device and subscriber association information may comprise an IMEI and an MSISDN, although other types of device and subscriber identification information are also contemplated such as, for example, an international mobile station identifier (IMSI), temporary international mobile station identifier (TIMSI), etc.

In one representative embodiment of the present invention, a service number may be associated with the service management module in the network. Such a service number may be a virtual (i.e., non-dialable) number. The service number may be rerouted employing, for example, a SMSC routing table.

The operator network may support the ingestion of update packages that are used to update mobile devices. The update package may be received from original equipment manufacturers (OEMs) and suppliers, and may be stored into servers such as, for example, delivery servers and device management (DM) servers. The update packages may be transferred using a secure collection of update packages (e.g., that contains one or more update packages exchanged as a single, protected unit) to be incorporated into a database accessible from servers such as, for example, delivery servers and device management (DM) servers. The update packages may, for example, comprise a set of executable instructions for converting a first version of code to a second, updated version of code. Although difficult, it may be possible to intercept such a download on today's wireless networks. However, such update packages do not contain source code, object code, or binary code that would be useful to anyone intercepting an update package.

In a representative embodiment of the present invention, an update package may be transferred from a generator such as, for example, an mProve™ Generator from Bitfone Corporation, to a lifecycle management system in the operator's network. An administrator of the lifecycle management system may search, view, change status, and monitor update packages throughout the lifetime of update packages such as those described above.

In a representative embodiment of the present invention, an administrator of a lifecycle management system may create/view/modify download groups. A download group may define a set of client devices able to download update packages for a particular set of selection criteria. In a representative embodiment of the present invention, a lifecycle management system may provide an input function to enter subscriber information directly from the administrator console or through another means such as, for example, the Internet.

In a representative embodiment of the present invention, SMS messages may be distributed via the SMSC to models of, for example, mobile handsets, mobile devices, and mobile telephones that are targets of the software update. The distribution of the software updates may be based upon a target user list (e.g., subscriber list) obtained from a customer information system. Using an SMS message as a trigger, a mobile device (e.g., mobile telephone, mobile handset) may download the update software either with user cooperation and involvement, or autonomously without user action (i.e., forcibly). In a representative embodiment of the present invention, the lifecycle management system may have a function to receive a translation result (e.g., OK (i.e., success)/NG (i.e.,"no good" or failure); and an error code when failure occurs) from the SMSC, to reflect it in the target user list, and to manage progress status.

In a representative embodiment of the present invention, a device management (DM) server (DMS) in an operator's network may have a distribution control function to distribute SMS messages at a set schedule. This may be provided because of issues related to traffic concentration when there are many SMS notification targets. The DMS may also have SMS transmission retry and forced distribution functions able to be invoked by user commands from a maintenance terminal.

In a representative embodiment of the present invention, a lifecycle management system may be used to maintain user data such as, for example, an IMSI, a manufacturer identifier (ID), a model number, and a firmware version number in a database, in order to support use of a SIM/smart card. A SIM agent in the mobile device (e.g., mobile telephone, mobile handset) may, for example, report changes in the handset to the lifecycle management system in the operator's network, and user-related data may be modified accordingly.

In a representative embodiment in accordance with the present invention, a "SIM agent" may be used to support registration based upon the SIM/smart card, user data management, target user listing, and other features. The SIM agent may be a program that runs in the mobile handset (e.g., mobile device, mobile telephone). When a user changes a SIM card in the mobile handset, the SIM agent may compare the previous SIM card information stored, for example, in a cache in the handset (or in some specific location), and new SIM card information. If the mobile handset determines that the previous SIM card information and the new SIM card information are different, the mobile handset may report a message to the lifecycle management system located, for example, in the operator's network. This process may be referred to as "OTA service registering". In this manner, a server in the lifecycle management system may maintain changes to the SIM and mobile handset information. In a representative embodiment of the present invention, the SIM agent may be installed in the handset in order to perform "OTA service registering".

In a representative embodiment in accordance with the present invention, when an SMS message is received by the mobile handset (e.g., mobile device, mobile telephone) or if the user initiates terminal operation, the mobile handset may perform update package communication with a download server. The mobile handset may establish a secure session, following mutual authentication between the download server and the mobile handset. The mobile handset may then check that the available update file on the download server matches the current software version (and firmware version) in the mobile handset. The mobile hand may then begin the download process.

Figure 7 shows a flowchart 700 of an exemplary method of operating a communication network of mobile electronic devices such as, for example, mobile handsets, each of the mobile electronic device having a subscriber identify module (SIM) card containing subscriber related information, in accordance with a representative embodiment of the present invention. The method of Figure 7 begins at start block 710 after normal operation of the mobile electronic devices has commenced. The mobile electronic devices may comprise, for example, cellular telephones, personal digital assistants, or personal computers. At some point in time after the mobile electronic device enters into communication with the communication network, the communication network may receive from the mobile electronic device information identifying the mobile electronic device (block 712). Such information may comprise, for example, an electronic serial number (ESN) and/or an international mobile equipment identifier (IMEI). Next, the communication network may receive subscriber-related information retrieved from the subscriber identity module (SIM) card attached to the mobile electronic device (block 714). Such information may comprise, for example, a mobile station international integrated services digital network (MSISDN) number, an international mobile station identifier, or a mobile identification number (MIN). A server within the communication network may then associate the information identifying the mobile electronic device, with the subscriber-related information from the SIM card (block 716). At some later time, the communication network may detect that the SIM card in the mobile electronic device has been changed (718). This may occur, for example, when information is received by the communication network indicating that the prior association of the information identifying the mobile electronic device and the subscriber related information of the previous SIM card is not longer valid. The communication network may then send a message to the mobile electronic device (block 720). The message may, for example, be a short message service (SMS) message requesting additional information from the mobile electronic device. The method of Figure 7 then ends (block 722).

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A communication network comprising:
at least one mobile electronic device (107) comprising a removable memory (139);
at least one server (143, 419, 525) capable of communication with the at least one mobile electronic device (107); and
the communication network (105) registering the at least one mobile electronic device (107) with the at least one server (143, 419, 525) such that the mobile electronic device (107) can be uniquely identified in the communication network (105), the communication network (105) associating information identifying the at least one mobile electronic device (107) with subscriber related information, and the communication network (105) detecting a change in an association of the information identifying the at least one mobile electronic device (107) and the subscriber related information; and
wherein the at least one mobile electronic device (107) is configured to detect a change of the removable memory (139) and to notify the at least one server (143, 419, 525) when a change of the removable memory (139) is detected.

2. The communication network according to claim 1 wherein the removable memory (139) comprises one of a smart card and a subscriber identity module (SIM) card.

3. The communication network according to claim 1 wherein the at least one server (143, 419, 525) comprises a registration server.

4. The communication network according to claim 1 wherein:
the at least one mobile electronic device (107) comprises an international mobile equipment identifier (IMEI);
the removable memory (139) comprises a mobile station international integrated services digital network (MSISDN) number; and
the network (105) registers the international mobile equipment identifier (IMEI) and the mobile station international integrated services digital network (MSISDN) number using the at least one server (143, 419, 525).

5. The communication network according to claim 4 wherein:
registering the at least one mobile electronic device (107) with the at least one server (143, 419, 525) comprises associating the international mobile equipment identifier (IMEI) with the mobile station international integrated services digital network (MSISDN) number.

6. The communication network according to claim 4 wherein:
registering the at least one mobile electronic device (107) with the at least one server (143, 419, 525) comprises associating the international mobile equipment identifier (IMEI) with the mobile station international integrated services digital network (MSISDN) number and profile information (311, 361).

7. The communication network according to claim 6 wherein the profile information (311, 361) comprises at least one of a manufacturer identifier, a model identifier, a firmware version, a list of registered services, device capabilities, and a subscriber class.

8. The communication network according to claim 1 wherein the at least one mobile electronic device (107) comprises one of a cellular telephone, a personal digital assistant (PDA), a pager, and a personal computers (PC).

9. The communication network according to claim 1 wherein the at least one server (143, 419, 525) requests at least one of an international mobile equipment identifier (IMEI) and a mobile station international integrated services digital network (MSISDN) number from the at least one mobile electronic device (107) when a change of the removable memory (139) is detected and notified by the at least one mobile electronic device (107).

10. The communication network according to claim 1, comprising a plurality of mobile electronic devices (107), each of the plurality of mobile electronic devices (107) comprising an international mobile equipment identifier (IMEI) associated at any point in time with one of a plurality of unique subscriber identification module (SIM) cards.

11. The communication network according to claim 10 wherein the communication network (105) is capable of detecting a change in the association of one of the plurality of subscriber identification module (SIM) cards and the international mobile equipment identifier (IMEI) of one of the plurality of mobile electronic devices (107).

12. The communication network according to claim 10 wherein a message is sent to the one of the plurality of mobile electronic devices (107) if a change in the association of one of the plurality of subscriber identification module (SIM) cards and the international mobile equipment identifier (IMEI) of one of the plurality of mobile electronic devices (107) occurs.

13. The communication network according to claim 12 wherein the message is a short message service (SMS) message.

14. The communication network according to claim 10 wherein the plurality of mobile electronic devices (107) comprises one of a cellular telephone, a personal digital assistant (PDA), a pager, and a personal computers (PC).

15. A method of operating a communication network (105) comprising a plurality of mobile electronic devices (107) having removable memory (139) containing subscriber related information, the method comprising:
receiving (712) by a server information identifying one of the plurality of mobile electronic devices (107);
receiving (714) by the server subscriber related information from the one of the plurality of mobile electronic devices (107);
associating (716) by the server the information identifying the one of the plurality of mobile electronic devices (107) with the received subscriber related information; and
detecting (718) by the server a change in an association of information identifying one of the plurality of mobile electronic devices (107) and subscriber related information, wherein detecting (718) a change in the association comprises detecting by an electronic device (107) a change of the removable memory (139) and notifying by the electronic device (107) the server (143, 419, 525) of the communication network (105) when a change of the removable memory (139) is detected.

16. The method according to claim 15, further comprising:
sending (720) a message to the one of the plurality of mobile electronic devices (107), if a change in an association of information identifying the one of the plurality of mobile electronic devices (107) and subscriber related information is detected and notified by the at least one mobile electronic device (107).

17. The method according to claim 15 wherein the message comprises a short message service (SMS) message.

18. The method according to claim 15 wherein the plurality of mobile electronic devices (107) comprises one of a cellular telephone, a personal digital assistant (PDA), a pager, and a personal computers (PC).

19. The method according to claim 15 wherein the removable memory (139) comprises one of a smart card and a subscriber identity module (SIM) card.

20. The method according to claim 15 wherein the information identifying one of the plurality of mobile electronic devices (107) comprises one of an electronic serial number (ESN) and an international mobile equipment identifier (IMSI).

21. The method according to claim 15 wherein the subscriber related information comprises a mobile station international integrated services digital network (MSISDN) number, an international mobile station identifier (IMSI), a temporary international mobile station identifier (TIMSI), and a mobile identification number (MIN).

## Patentansprüche

1. Ein Kommunikationsnetzwerk, das folgende Merkmale aufweist:
zumindest ein mobiles Elektronikgerät (107), das einen Wechselspeicher (139) aufweist;
zumindest einen Server (143, 419, 525), der zu einer Kommunikation mit dem zumindest einen mobilen Elektronikgerät (107) in der Lage ist; und
wobei das Kommunikationsnetzwerk (105) das zumindest eine mobile Elektronikgerät (107) bei dem zumindest einen Server (143, 419, 525) derart registriert, dass das mobile Elektronikgerät (107) in dem Kommunikationsnetzwerk (105) eindeutig identifiziert werden kann, wobei das Kommunikationsnetzwerk (105) Informationen, die das zumindest eine mobile Elektronikgerät (107) identifizieren, teilnehmerbezogenen Informationen zuordnet und das Kommunikationsnetzwerk (105) eine Änderung einer Zuordnung der Informationen, die das zumindest eine mobile Elektronikgerät (107) identifizieren, und der teilnehmerbezogenen Informationen erfasst; und
wobei das zumindest eine mobile Elektronikgerät (107) dazu konfiguriert ist, eine Änderung des Wechselspeichers (139) zu erfassen und den zumindest einen Server (143, 419, 525) zu benachrichtigen, wenn eine Änderung des Wechselspeichers (139) erfasst wird.

2. Das Kommunikationsnetzwerk gemäß Anspruch 1, bei dem der Wechselspeicher (139) entweder eine Smart-Card oder eine Teilnehmerkennungsmodul-Karte (SIM-Karte, SIM = subscriber identity module) aufweist.

3. Das Kommunikationsnetzwerk gemäß Anspruch 1, bei dem der zumindest eine Server (143, 419, 525) einen Registrierungsserver aufweist.

4. Das Kommunikationsnetzwerk gemäß Anspruch 1, bei dem:
das zumindest eine mobile Elektronikgerät (107) einen internationalen Mobilgerätidentifizierer (IMEI - international mobile equipment identifier) aufweist;
der Wechselspeicher (139) eine MSISDN-Number (MSISDN = mobile station international integrated services digital network) aufweist; und
das Netzwerk (105) den internationalen Mobilgerätidentifizierer (IMEI) und die MSISDN-Nummer unter Verwendung des zumindest einen Servers (143, 419, 425) registriert.

5. Das Kommunikationsnetzwerk gemäß Anspruch 4, bei dem:
das Registrieren des zumindest einen mobilen Elektronikgerätes (107) bei dem zumindest einen Server (143, 419, 525) ein Zuordnen des internationalen Mobilgerätidentifizierers (IMEI) zu der MSISDN-Nummer aufweist.

6. Das Kommunikationsnetzwerk gemäß Anspruch 4, bei dem:
das Registrieren des zumindest einen mobilen Elektronikgerätes (107) bei dem zumindest einen Server (143, 419, 525) ein Zuordnen des internationalen Mobilgerätidentifizierers (IMEI) zu der MSISDN-Nummer und zu Profilinformationen (311, 361) aufweist.

7. Das Kommunikationsnetzwerk gemäß Anspruch 6, bei dem die Profilinformationen (311, 361) zumindest eine beziehungsweise einen eines Herstelleridentifizierers, eines Modellidentifizierers, einer Firmware-Version, einer Liste registrierter Dienste, von Gerätfähigkeiten und einer Teilnehmerkategorie aufweisen.

8. Das Kommunikationsnetzwerk gemäß Anspruch 1, bei dem das zumindest eine mobile Elektronikgerät (107) eines beziehungsweise einen beziehungsweise eine eines Mobiltelefons, eines persönlichen digitalen Assistenten (PDA - personal digital assistant), einer Rufanlage und eines Personal-Computers (PC) aufweist.

9. Das Kommunikationsnetzwerk gemäß Anspruch 1, bei dem der zumindest eine Server (143, 419, 525) zumindest entweder einen internationalen Mobilgerätidentifizierer (IMEI) und/oder eine MSISDN-Nummer von dem zumindest einen mobilen Elektronikgerät (107) anfordert, wenn eine Änderung des Wechselspeichers (139) erfasst und durch das zumindest eine mobile Elektronikgerät (107) mitgeteilt wird.

10. Das Kommunikationsnetzwerk gemäß Anspruch 1, das eine Mehrzahl von mobilen Elektronikgeräten (107) aufweist, wobei jedes der Mehrzahl von mobilen Elektronikgeräten (107) einen internationalen Mobilgerätidentifizierer (IMEI) aufweist, der zu jeglichem Zeitpunkt einer einer Mehrzahl von eindeutigen Teilnehmerkennungsmodulkarten (SIM-Karten) zugeordnet ist.

11. Das Kommunikationsnetzwerk gemäß Anspruch 10, wobei das Kommunikationsnetzwerk (105) in der Lage ist, eine Änderung der Zuordnung einer der Mehrzahl von Teilhehmerkennungsmodulkarten (SIM-Karten) und des internationalen Mobilgerätidentifizierers (IMEI) eines der Mehrzahl von mobilen Elektronikgeräten (107) zu erfassen.

12. Das Kommunikationsnetzwerk gemäß Anspruch 10, bei dem an das eine der Mehrzahl von mobilen Elektronikgeräten (107) eine Nachricht gesendet wird, falls eine Änderung der Zuordnung einer der Mehrzahl von Teilnehmerkennungsmodulkarten (SIM-Karten) und des internationalen Mobilgerätidentifizierers (IMEI) eines der Mehrzahl von mobilen Elektronikgeräten (107) auftritt.

13. Das Kommunikationsnetzwerk gemäß Anspruch 12, bei dem die Nachricht eine Kurznachrichtendienst-Nachricht (SMS-Nachricht) ist.

14. Das Kommunikationsnetzwerk gemäß Anspruch 10, bei dem die Mehrzahl von mobilen Elektronikgeräten (107) eines beziehungsweise einen beziehungsweise eine eines Mobiltelefons, eines persönlichen digitalen Assistenten (PDA - personal digital assistant), einer Rufanlage und eines Personal-Computers (PC) aufweist.

15. Ein Verfahren zum Betreiben eines Kommunikationsnetzwerks (105), das eine Mehrzahl von mobilen Elektronikgeräten (107) aufweist, die einen Wechselspeicher (139) aufweisen, der teilnehmerbezogene Informationen enthält, wobei das Verfahren folgende Schritte aufweist:
Empfangen (712), seitens eines Servers, von Informationen, die eines der Mehrzahl von mobilen Elektronikgeräten (107) identifizieren;
Empfangen (714), seitens des Servers, von teilnehmerbezogenen Informationen von dem einen der Mehrzahl von mobilen Elektronikgeräten (107);
Zuordnen (716), seitens des Servers, der Informationen, die das eine der Mehrzahl von mobilen Elektronikgeräten (107) identifizieren, zu den empfangenen teilnehmerbezogenen Informationen; und
Erfassen (718), seitens des Servers, einer Änderung einer Zuordnung von Informationen, die eines der Mehrzahl von mobilen Elektronikgeräten (107) identifizieren, und teilnehmerbezogenen Informationen,
wobei das Erfassen (718) einer Änderung der Zuordnung ein Erfassen, seitens eines Elektronikgeräts (107), einer Änderung des Wechselspeichers (139) und ein Benachrichtigen, seitens des Elektronikgeräts (107), des Servers (143, 419, 525) des Kommunikationsnetzwerks (105), wenn eine Änderung des Wechselspeichers (139) erfasst wird, aufweist.

16. Das Verfahren gemäß Anspruch 15, das ferner folgenden Schritt aufweist:
Senden (720) einer Nachricht an das eine der Mehrzahl von mobilen Elektronikgeräten (107), falls eine Änderung einer Zuordnung von Informationen, die das eine der Mehrzahl von mobilen Elektronikgeräten (107) identifizieren, und teilnehmerbezogenen Informationen erfasst wird und seitens des zumindest einen mobilen Elektronikgerätes (107) mitgeteilt wird.

17. Das Verfahren gemäß Anspruch 15, bei dem die Nachricht eine Kurznachrichtendienst-Nachricht (SMS-Nachricht) ist.

18. Das Verfahren gemäß Anspruch 15, bei dem die Mehrzahl von mobilen Elektronikgeräten (107) eines beziehungsweise einen beziehungsweise eine eines Mobiltelefons, eines persönlichen digitalen Assistenten (PDA - personal digital assistant), einer Rufanlage und eines Personal-Computers (PC) aufweist.

19. Das Verfahren gemäß Anspruch 15, bei dem der Wechselspeicher (139) entweder eine Smart-Card oder eine Teilnehmerkennungsmodul-Karte (SIM-Karte) aufweist.

20. Das Verfahren gemäß Anspruch 15, bei dem die Informationen, die eines der Mehrzahl von mobilen Elektronikgeräten (107) identifizieren, entweder eine elektronische Seriennummer (ESN) oder einen internationalen Mobilgerätidentifizierer (IMSI) aufweisen.

21. Das Verfahren gemäß Anspruch 15, bei dem die teilnehmerbezogenen Informationen eine MSISDN-Nummer, einen IMSI - international mobile station identifier), einen TIMSI - temporary international mobile station identifier) und eine Mobilidentifikationsnummer (MIN - mobile identification number) aufweisen.

## Revendications

1. Réseau de communication, comprenant:
au moins un dispositif électronique mobile (107) comprenant une mémoire amovible (139);
au moins un serveur (143, 419, 525) à même de communiquer avec l'au moins un dispositif électronique mobile (107); et
le réseau de communication (105) enregistrant l'au moins un dispositif électronique mobile (107) auprès de l'au moins un serveur (143, 419, 525) de sorte que le dispositif électronique mobile (107) puisse être identifié de manière univoque dans le réseau de communication (105), le réseau de communication (105) associant les informations identifiant l'au moins un dispositif électronique mobile (107) avec les informations relatives à l'abonné, et
le réseau de communication (105) détectant une modification dans une association des informations identifiant l'au moins un dispositif électronique mobile (107) et des informations relatives à l'abonné; et
dans lequel l'au moins un dispositif électronique mobile (107) est configuré pour détecter une modification de la mémoire amovible (139) et pour notifier l'au moins un serveur (143, 419, 525) lorsqu'une modification de la mémoire amovible (139) est détectée.

2. Réseau de communication selon la revendication 1, dans lequel la mémoire amovible (139) comprend une carte intelligente et une carte à module d'identité d'abonné (SIM).

3. Réseau de communication selon la revendication 1, dans lequel l'au moins un serveur (143, 419, 525) comprend un serveur d'enregistrement.

4. Réseau de communication selon la revendication 1, dans lequel:
l'au moins un dispositif électronique mobile (107) comprend un identificateur de matériel mobile international (IMEI);
la mémoire amovible (139) comprend un numéro de réseau numérique de services intégrés internationaux de station mobile (MSISDN); et
le réseau (105) enregistre identificateur de matériel mobile international (IMEI) et le numéro de réseau numérique de services intégrés internationaux de station mobile (MSISDN) à l'aide de l'au moins un serveur (143, 419, 525).

5. Réseau de communication selon la revendication 4, dans lequel:
l'enregistrement de l'au moins un dispositif électronique mobile (107) auprès de l'au moins un serveur (143, 419, 525) comprend le fait d'associer l'identificateur de matériel mobile international (IMEI) avec le numéro de réseau numérique de services intégrés internationaux de station mobile (MSISDN).

6. Réseau de communication selon la revendication 4, dans lequel:
l'enregistrement de l'au moins un dispositif électronique mobile (107) auprès de l'au moins un serveur (143, 419, 525) comprend le fait d'associer l'identificateur de matériel mobile international (IMEI) avec le numéro de réseau numérique de services intégrés internationaux de station mobile (MSISDN) et les informations de profil (311, 361).

7. Réseau de communication selon la revendication 6, dans lequel les informations de profil (311, 361) comprennent au moins l'un parmi un identificateur de fabricant, un identificateur de modèle, une version de progiciel, une liste de services enregistrés, des capacités de dispositif, et une classe d'abonné.

8. Réseau de communication selon la revendication 1, dans lequel l'au moins un dispositif électronique mobile (107) comprend l'un parmi un téléphone cellulaire, un assistant numérique (PDA), un récepteur d'appels, et un ordinateur personnel (PC).

9. Réseau de communication selon la revendication 1, dans lequel l'au moins un serveur (143, 419, 525) sollicite au moins l'un parmi un identificateur de matériel mobile international (IMEI) et un numéro de réseau numérique de services intégrés internationaux de station mobile (MSISDN) de l'au moins un dispositif électronique mobile (107) lorsqu'une modification de la mémoire amovible (139) est détectée et notifiée par l'au moins un dispositif électronique mobile (107).

10. Réseau de communication selon la revendication 1, comprenant une pluralité de dispositifs électroniques mobiles (107), chacun de la pluralité de dispositifs électroniques mobiles (107) comprenant un identificateur de matériel mobile international (IMEI) associé à tout point dans le temps à l'une d'une pluralité de cartes à module d'identification d'abonné (SIM) unique.

11. Réseau de communication selon la revendication 10, dans lequel le réseau de communication (105) est à même de détecter une modification dans l'association de l'une de la pluralité de cartes à module d'identification d'abonné (SIM) et de l'identificateur de matériel mobile international (IMEI) de l'un de la pluralité de dispositifs électroniques mobiles (107).

12. Réseau de communication selon la revendication 10, dans lequel un message est envoyé à l'un de la pluralité de dispositifs électroniques mobiles (107) lorsqu'il se produit une modification dans l'association de l'une de la pluralité de cartes à module d'identification d'abonné (SIM) et de l'identificateur de matériel mobile international (IMEI) de l'un de la pluralité de dispositifs électroniques mobiles (107).

13. Réseau de communication selon la revendication 12, dans lequel le message est un message de service de messages courts (SMS).

14. Réseau de communication selon la revendication 10, dans lequel la pluralité de dispositifs électroniques mobiles (107) comprend l'un parmi un téléphone cellulaire, un assistant numérique (PDA), un récepteur d'appels, et un ordinateur personnel (PC).

15. Procédé permettant de faire fonctionner un réseau de communication (105) comprenant une pluralité de dispositifs électroniques mobiles (107) présentant une mémoire amovible (139) contenant des informations relatives à l'abonné, le procédé comprenant:
recevoir (712), par un serveur, les informations identifiant l'un de la pluralité de dispositifs électroniques mobiles (107);
recevoir (714), par le serveur, les informations relatives à l'abonné de l'un de la pluralité de dispositifs électroniques mobiles (107);
associer (716), par le serveur, les informations identifiant l'un de la pluralité de dispositifs électroniques mobiles (107) aux informations relatives à l'abonné reçues; et
détecter (718), par le serveur, une modification dans une association des informations identifiant l'un de la pluralité de dispositifs électroniques mobiles (107) et des informations relatives à l'abonné,
dans lequel la détection (718) d'une modification dans l'association comprend le fait de détecter, par un dispositif électronique (107), une modification de la mémoire amovible (139) et notifier par le dispositif électronique (107), le serveur (143, 419, 525) du réseau de communication network (105) lorsqu'il est détecté une modification de la mémoire amovible (139).

16. Procédé selon la revendication 15, comprenant par ailleurs:
envoyer (720) un message à l'un de la pluralité de dispositifs électroniques mobiles (107) si une modification dans une association des informations identifiant l'un de la pluralité de dispositifs électroniques mobiles (107) et des informations relatives à l'abonné est détectée et notifiée par l'au moins un dispositif électronique mobile (107).

17. Procédé selon la revendication 15, dans lequel le message comprend un message de service de messages courts (SMS).

18. Procédé selon la revendication 15, dans lequel la pluralité de dispositifs électroniques mobiles (107) comprend l'un parmi un téléphone cellulaire, un assistant numérique (PDA), un récepteur d'appels, et un ordinateur personnel (PC).

19. Procédé selon la revendication 15, dans lequel la mémoire amovible (139) comprend l'une parmi une carte intelligente et une carte à module d'identité d'abonné (SIM).

20. Procédé selon la revendication 15, dans lequel les informations identifiant l'un de la pluralité de dispositifs électroniques mobiles (107) comprennent un numéro de série électronique (ESN) et un identificateur de matériel mobile international (IMS1).

21. Procédé selon la revendication 15, dans lequel les informations relatives à l'abonné comprennent un numéro de réseau numérique de services intégrés internationaux de station mobile (MSISDN), un identificateur de station mobile international (IMS1), un identificateur de station mobile international temporaire (TIMSI), et un numéro d'identification mobile (MINI).
